# EUROPÄISCHE PATENTSCHRIFT

(11) **EP 2 542 323 B1**
(45) Veröffentlichungstag und Bekanntmachung des Hinweises auf die Patenterteilung: **05.09.2018**
(21) Anmeldenummer: 11708191.9
(22) Anmeldetag: 02.03.2011
(51) Int. Cl.: B01D 35/153, B01D 35/16, B01D 36/00, F02M 37/22

(54) **FILTERVORRICHTUNG**
FILTER DEVICE
DISPOSITIF DE FILTRATION

(30) Priorität: 04.03.2010 DE 102010010304
(43) Veröffentlichungstag der Anmeldung: 09.01.2013
(73) Patentinhaber: HYDAC FILTERTECHNIK GMBH, 66280 Sulzbach/Saar (DE)
(72) Erfinder: EBERLE, Richard, 66399 Ormersheim (DE); KREIBIG, Micha, 66780 Rehlingen-Siersburg (DE)
(74) Vertreter: Bartels und Partner, Patentanwälte
(86) Internationale Anmeldenummer: PCT/EP2011/001013
(87) Internationale Veröffentlichungsnummer: WO 2011/107264

(56) Entgegenhaltungen:
- DE-A1- 10 309 428
- US-A- 3 165 470
- US-A- 3 187 895
- US-A- 3 508 658
- US-A- 4 253 954
- US-A1- 2002 117 441

## Beschreibung

Die Erfindung betrifft eine Filtervorrichtung, insbesondere für mit Wasserbeimengungen belastete Fluide wie Dieselöl, mit den Merkmalen im Oberbegriff von Anspruch 1.

Filtervorrichtungen dieser Art sind bekannt. Solche Filtervorrichtungen werden beispielsweise bei Kraftstoffsystemen für Verbrennungsmotoren eingesetzt, um empfindliche Komponenten, insbesondere Einspritzsysteme, gegen Beeinträchtigungen durch im Kraftstoff mitgeführte Wasseranteile zu schützen. Die Abscheidung von im Kraftstoff mitgeführten Wasseranteilen kann hierbei durch einen Koagulationsprozess bewirkt werden, bei dem an dem Filtermedium Wassertröpfchen gebildet werden, die aus dem im Filterelement gebildeten Abscheideraum zum Wassersammelraum abfließen können.

Die US 3 508 658 beschreibt eine gattungsgemäße Filtervorrichtung, insbesondere für mit Wasserbeimengungen belastete Fluide wie Dieselöl, mit einem Fluidanschlüsse als Fluideingang und Fluidausgang aufweisenden Filtergehäuse, in dem mindestens ein Filterelement aufnehmbar ist, dessen einen inneren Filterhohlraum umgebendes Filtermedium beim Filtriervorgang von Rohseite zu Reinseite hin durchströmbar ist, wobei an einer Seite des Filtermediums eine Wasser-Abscheideeinrichtung und ein Abscheidebereich für abgeschiedenes Wasser vorhanden sind und das Filterelement einen eine Fluidverbindung zum Filterhohlraum bildenden Durchgang und zumindest einen zum Abscheidebereich offenen Wasserdurchlass aufweist, an einer Elementaufnahme des Filtergehäuses festlegbar und mit einem Wassersammelraum verbindbar ist, wobei ein Adapterteil zumindest als Teil einer Fluidführungseinrichtung vorgesehen ist, in dem voneinander getrennte Fluidwege gebildet sind, von denen der erste Fluidweg von einem Fluidanschluss des Gehäuses über den Durchgang zum inneren Filterhohlraum des Filterelementes führt und der zweite Fluidweg den jeweiligen Wasserdurchlass mit dem Wassersammelraum verbindet, wobei der zweite Fluidweg des Adapterteils den jeweiligen Wasserdurchlass der Endkappe mit dem Wassersammelraum verbindet.

Die US 2002/0117441 A1 beschreibt eine Kraftstoffaufarbeitungs- und -filtervorrichtung. Durch einen inneren Fluidkanal wird Kraftstoff durch einen unteren Gehäuseteil zu und von einem Filtermedium gefördert. Durch eine außen am Filtermedium angeordnete Flusssteuerungseinrichtung wird Wasser aus dem Kraftstoff abgeschieden, der dann durch Schlitze in einer Basisplatte in den im unteren Gehäuseteil gelegenen Wassersammelraum übergeleitet wird. In einem rohrförmigen Verbindungsstück sind zwei voneinander getrennte Fluidwege ausgebildet. Diese dienen aber dem Transport vom Fluideingang zur Rohseite des Filterelements sowie von der Reinseite zum Fluidausgang.

Die US 4 253 954 beschreibt eine Trennvorrichtung, um Wasser von Kraftstoff zu trennen. Die Trennvorrichtung weist ein Gehäuse mit einem offenen Ende auf, an das sich eine Abschlusseinheit anschließt, die einen Flüssigkeitseinlass und -auslass aufweist. Mit Hilfe der Anschlusseinheit ist die Trennvorrichtung an ein hydraulisches System anschließbar. In dem Gehäuse ist ein Filterelement angeordnet, bestehend aus einer äußeren Filtereinheit und einer inneren Filtereinheit. Das Gehäuse ist axial von Endkappen abgeschlossen. Die untere Endkappe enthält einen Sumpf, in dem Wasser aufgefangen und periodisch aus dem Gehäuse abgelassen werden kann. Durch die US 3 165 470 gehört eine Koalisier- und Abscheidevorrichtung zum Stand der Technik. Zu reinigende Flüssigkeit (Unfiltrat) strömt von oben in den Innenraum des Filterelements und fließt als gereinigte Flüssigkeit (Filtrat) seitlich ab. Vom Kraftstoff abgeschiedenes Wasser fließt durch Öffnungen in einer Bodenplatte und wird in einem Bodenteil der Vorrichtung gesammelt und kann von dort durch eine Öffnung abgelassen werden. Wegen der hohen Anforderungen, die bei derartigen Filtervorrichtungen an die Betriebssicherheit zu stellen sind, sind die Fluidverbindungen zwischen Anschlüssen des Gehäuses und dem Filterelement sowie zwischen diesem und dem Wassersammelraum konstruktiv aufwendig auszubilden. Bei den in Frage kommenden großen Stückzahlen derartiger Vorrichtungen fallen die dadurch bedingten hohen Herstellungskosten besonders stark ins Gewicht.

Im Hinblick auf diese Problematik stellt sich die Erfindung die Aufgabe, eine Filtervorrichtung der betrachteten Art zur Verfügung zu stellen, die kostengünstig und rationell herstellbar ist. Erfindungsgemäß ist diese Aufgabe durch eine Filtervorrichtung gelöst, die die Merkmale des Patentanspruches 1 in seiner Gesamtheit aufweist. Gemäß dem kennzeichnenden Teil des Anspruches 1 besteht eine wesentliche Besonderheit der Erfindung darin, dass die Elementaufnahme einen Rohrstutzen aufweist, der die Verbindung zwischen dem das Filterelement aufnehmenden Hauptteil des Gehäuses und dem darunter befindlichen Wassersammelraum bildet, und dass das Adapterteil einen Hülsenkörper aufweist, der im Rohrstutzen aufnehmbar ist. Die Fluidverbindung zwischen Endkappe und Adapterteil lässt sich hierbei besonders einfach in der Weise realisieren, dass die Endkappe an der Außenseite des Rohrstutzens der Elementaufnahme abgedichtet ist, innerhalb dessen das Adapterteil die getrennten Fluidwege für abgeschiedenes Wasser und abzureinigendes Fluid bildet. Eine Abdichtung an der Innenseite des Rohrstutzens ist gleichfalls möglich.

Es ist ferner vorgesehen, dass ein vorzugsweise an der Elementaufnahme des Filtergehäuses aufnehmbares Adapterteil als Fluidführungseinrichtung vorgesehen ist, die die in Frage kommenden Fluidverbindungen zur Verfügung stellt, indem das Adapterteil voneinander getrennte Fluidwege bildet, von denen der erste Fluidweg von einem Fluidanschluss über den Durchgang zum inneren Filterhohlraum des Filterelementes führt und der zweite Fluidweg den jeweiligen Wasserdurchlass am Filterelement mit dem Wassersammelraum verbindet. Dadurch, dass somit die Fluidführungseinrichtung nicht zwingend Bestandteil des Filterelementes zu sein braucht, kann dieses selbst ohne die kostenintensiven Fluidführungselemente in einfacher Bauweise entsprechend kostengünstig hergestellt werden. Anders als bei dem Filterelement zugehörigen Fluidführungselementen, wie sie beispielsweise durch eine aufwendig gestaltete Endkappe des Filterelements realisiert sind, und beim Filterelementwechsel zusammen mit dem verbrauchten Filterelement ausgewechselt werden, kann bei der Erfindung die Fluidführungseinrichtung in Form des an der Elementaufnahme befindlichen Adapterteils im Filtergehäuse verbleiben, so dass ein weiterer Kostenvorteil erreicht ist. Ein weiterer Vorteil besteht darin, dass Adapterteile einheitlicher Bauweise für unterschiedlich gestaltete und/oder unterschiedlichen Spezifikationen entsprechende Filterelemente, die an der Elementaufnahme festlegbar sind, benutzt werden können, so dass die Adapterteile gleichartig in hohen Stückzahlen und damit besonders rationell gefertigt werden können.

Das jeweilige Adapterteil lässt sich jedoch, vorzugsweise als Clipteil ausgebildet, an der Unterseite des jeweiligen Filterelements festlegen, beispielsweise an der unteren Endkappe des Filterelements.

Bei Ausführungsbeispielen, bei denen das Filterelement am unteren Ende eine Endkappe aufweist, die den in den Filterhohlraum führenden Durchgang und den mindestens einen Wasserdurchlass aufweist, ist die Endkappe mit dem Adapterteil in abgedichtete Fluidverbindung bringbar. Dies kann auf einfache Weise beispielsweise so erfolgen, dass einerseits die Endkappe zur Bildung einer Abdichtung an der Elementaufnahme festlegbar ist und das Adapterteil andererseits an der Elementaufnahme abgedichtet ist.

Bei Ausführungsbeispielen, bei denen das Filtermedium des Filterelements beim Filtriervorgang von seiner äußeren Rohseite her zu dem die Reinseite bildenden inneren Filterhohlraum hin durchströmbar ist, ist die Anordnung vorzugsweise so getroffen, dass der erste Fluidweg des Adapterteils den in den Filterhohlraum führenden Durchgang der Endkappe mit dem Fluidausgang des Gehäuses verbindet und der zweite Fluidweg des Adapterteils den jeweiligen Wasserdurchlass der Endkappe mit dem Wassersammelraum verbindet.

Bei besonders vorteilhaften Ausführungsbeispielen ist die Anordnung so getroffen, dass im Hülsenkörper des Adapterteils ein Innenrohr angeordnet ist, dessen offenes Ende einen Anschlussstutzen bildet, der sich unter Abdichtung durch den Durchgang der Endkappe in den Filterhohlraum des in Funktionsposition befindlichen Filterelementes erstreckt und einen Teilabschnitt des ersten Fluidweges bildet.

Entsprechend einer vorteilhaften Gestaltung kann zwischen der Außenseite des Innenrohres und der Innenseite des Hülsenkörpers ein einen Wasserkanal bildender Zwischenraum vorgesehen sein, der den zweiten Fluidweg bildet, über den aus dem jeweiligen Wasserdurchlass der Endkappe austretendes Wasser über das offene untere Ende des Hülsenkörpers in den Wassersammelraum gelangt.

Hinsichtlich der Führung des ersten Fluidweges kann die Anordnung vorteilhafter Weise so getroffen sein, dass an der Außenseite des Hülsenkörpers radial vorstehende Ringteile mit der Innenseite des Rohrstutzens der Elementaufnahme in abgedichtete Anlage kommen und voneinander in einem axialen Abstand angeordnet sind, so dass zwischen ihnen an der Außenseite des Hülsenkörpers und an der Innenseite des Rohrstutzens ein Ringraum gebildet ist, der als Ausgangsteil des ersten Fluidweges mit dem Fluidausgang des Gehäuses in Verbindung ist.

Für den weiteren Verlauf des ersten Fluidweges kann das Adapterteil mit Vorteil so gestaltet sein, dass im Bereich des vom Anschlussstutzen abgewandten unteren Endes des Innenrohres des Adapterteils ein Querkanal abzweigt, der in den Ringraum mündet und den ersten Fluidweg über das Innenrohr und dessen Anschlussstutzen fortsetzt.

Zur abgedichteten Festlegung der Endkappe des Filterelements an der Elementaufnahme kann die betreffende Endkappe einen vom Endkappenboden axial nach unten vorstehenden Lagerungsring aufweisen, der das zugewandte Ende des Rohrstutzens der Elementaufnahme unter Bildung einer Abdichtung übergreift.

Bei besonders vorteilhaften Ausführungsbeispielen weist die betreffende Endkappe des Filterelements einen den Durchgang umgebenden, vom Endkappenboden axial in den Abscheideraum vorstehenden Ringkörper auf, an dessen Innenseite sich der zumindest eine Wasserdurchlass befindet.

Wenn an der Endkappe ein zweiter, den Durchgang umgebender, axial vorstehender Ringkörper radial innerhalb des ersten Ringkörpers angeordnet ist, kann dieser eine Abstützung für ein zur Abscheideeinrichtung gehörendes hydrophobes Sieb bilden, das an der Außenseite des zweiten Ringkörpers anliegt. Bei dem in Funktionsposition befindlichen Filterelement kann sich der Anschlussstutzen am Ende des Innenrohres des Adapterteils in den Ringkörper hinein erstrecken und gegen dessen Innenseite abgedichtet sein.

Der Endkappenboden kann in dem zwischen erstem und zweitem Ringkörperpaar gelegenen Bereich eine ringförmige Bodenvertiefung aufweisen, wobei mindestens ein Durchbruch als Wasserdurchlass an der so gebildeten tiefsten Stelle des Abscheideraumes vorgesehen ist.

Bei der Abdichtung, die bei dem an der Elementaufnahme festgelegten Filterelement zwischen dem Endkappenboden und dem Rohrstutzen der Elementaufnahme gebildet ist, kann auf eine Dichtungseinrichtung, die den äußeren Umfangsrand der Endkappe gegenüber der Innenwand des Filtergehäuses abdichtet, verzichtet werden, so dass eine einen entsprechend großen Durchmesser aufweisende Dichtung in Wegfall kommen kann und stattdessen die Abdichtung zwischen Rohseite und Reinseite mit wesentlich kleinerem Dichtungsdurchmesser verwirklicht ist, wodurch sich verringerte

Montagekräfte und dadurch eine Vereinfachung bei Einbau und Ausbau von Filterelementen ergeben.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispiels der erfindungsgemäßen Filtervorrichtung in Form eines Kraftstofffilters;
- Fig. 2: eine vergrößerte, in Längsrichtung aufgeschnitten gezeichnete perspektivische Schrägansicht lediglich des der Elementaufnahme benachbarten Bereichs des Ausführungsbeispiels von Fig. 1; und
- Fig. 3: eine der Fig. 2 ähnliche Darstellung, in der ein abgewandeltes Ausführungsbeispiel dargestellt ist.

Nachstehend ist die Erfindung am Beispiel eines Kraftstofffilters erläutert, der in einem (nicht gezeigten) Kraftstoffversorgungssystem eines Verbrennungsmotors zur Reinigung von Dieselöl vorgesehen ist, das mit gewissen Wasserbeimengungen verunreinigt ist. Die Erfindung eignet sich gleichermaßen für andersartige Fluide.

Die Vorrichtung weist ein Filtergehäuse 1 mit einem hohlzylinderförmigen Hauptteil 3 und einem sich an dessen Unterseite befindliches Bodenteil 5 auf. Am oberen Ende ist mit dem Hauptteil 3 ein Gehäusedeckel 7 verschraubt, der für Einbau und Ausbau eines Filterelements 9 abnehmbar ist. Das Filtermedium 11 des im Filtergehäuse 1 aufgenommenen Filterelements 9 ist durch eine einen Hohlzylinder bildende Filtermatte gebildet. Zwischen der Außenseite des Filtermediums 11 und der Innenwand des Gehäuses 1 befindet sich ein Zwischenraum, der beim Filtrationsvorgang die Rohseite 13 bildet. Der abzureinigende Kraftstoff wird zur Rohseite 13 über einen Fluidanschluss des Gehäuses 1 zugeführt, der bei der in der Zeichnung gezeigten Drehposition des Filtergehäuses nicht sichtbar ist. Beim Filtervorgang durchströmt der Kraftstoff das Filtermedium 11 von der äußeren Rohseite 13 her nach innen zu einem inneren Filterhohlraum 17, der die Reinseite 19 bildet.

In der bei Filterelementen üblichen Weise sind an den Enden Endkappen 21 und 23 vorgesehen, die Einfassungen für das Filtermedium 11 und ein an dessen Innenseite anliegendes, fluiddurchlässiges Stützrohr 26 bilden. In einem radialen Abstand vom Stützrohr 26 befindet sich ein den inneren Filterhohlraum 17 rohrförmig umgebendes hydrophobes Sieb 25. Um eine Wasserabscheidung zu bewirken, wird bei derartigen Kraftstofffiltern ein Filtermedium 11 benutzt, das für das von Kraftstoff mitgeführte Wasser koagulierend wirkt, so dass Wasser in Tröpfchenform ausfällt, das in dem einen Abscheidebereich bildenden Abscheideraum 27 zwischen hydrophobem Sieb 25 und Stützrohr 26 verbleibt und absinkt, da das Sieb für koagulierte Wassertropfen undurchlässig ist.

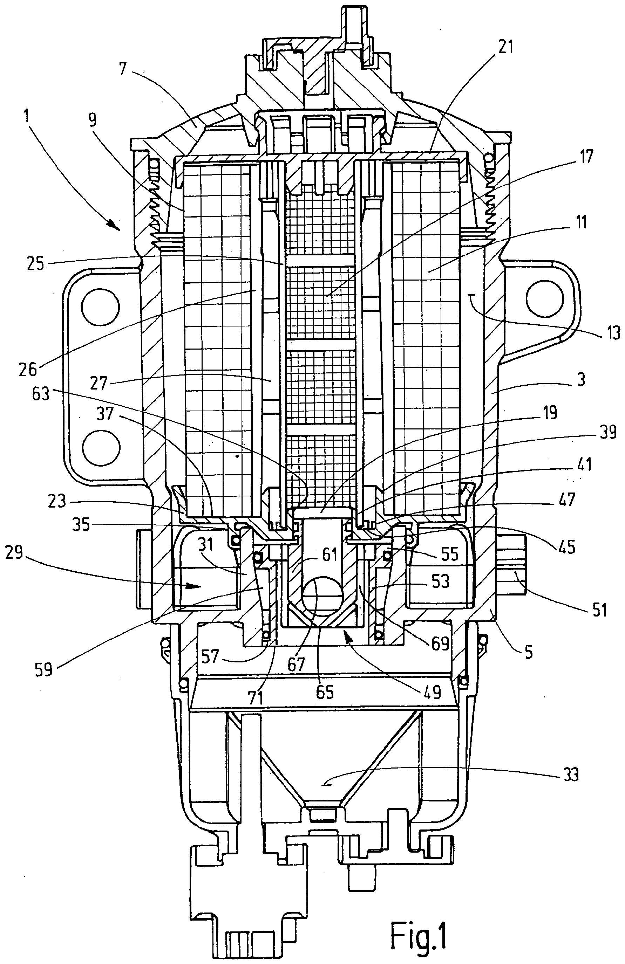

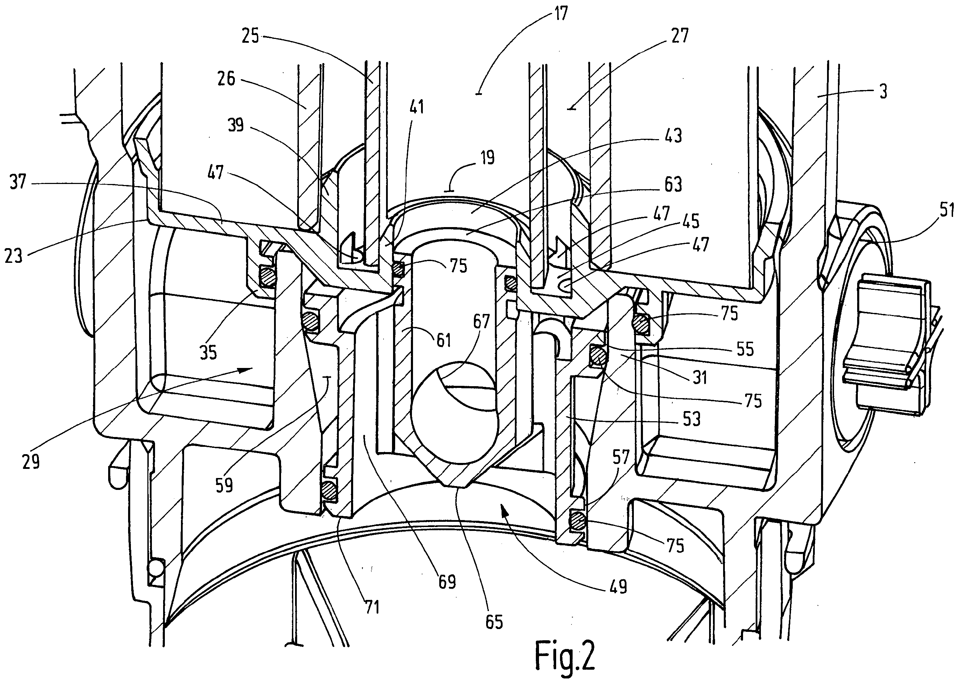

Mit seiner unteren Endkappe 23 ist das Filterelement 9 an einer gehäusefesten Elementaufnahme 29 festgelegt. Diese hat die Form eines Rohrstutzens 31, der die Verbindung zwischen dem das Filterelement 9 aufnehmenden Hauptteil 3 des Gehäuses 1 und dem darunter befindlichen Wassersammelraum 33 bildet. Für die Festlegung des Filterelements 9 an der Elementaufnahme 29 weist die untere Endkappe 23 einen Lagerungsring 35 auf, der sich von dem Endkappenboden 37, welcher die Auflage für die Enden des Filtermediums 11 und des Stützrohres 26 bildet, axial nach unten erstreckt und bei der Funktionsposition des Filterelements 9 den oberen Randbereich des Rohrstutzens 31 der Elementaufnahme 29 übergreift, wobei ein im Lagerungsring 35 sitzendes Dichtelement die Abdichtung bildet. Der Lagerungsring 35 umgibt bei dem in Fig. 1 und 2 gezeigten ersten Ausführungsbeispiel zwei in einem radialen Abstand voneinander angeordnete Ringkörper 39 und 41, die vom Endkappenboden 37 weg axial ins Innere des Filterelements 9 vorstehen und den in den inneren Filterhohlraum 17 führenden Durchgang 43 umgeben. An der Außenseite des radial außenliegenden Ringkörpers 39 liegt das Stützrohr 26 an. An der Außenseite des weiter innenliegenden Ringkörpers 41 liegt das hydrophobe Sieb 25 an. In dem Zwischenraum zwischen den Ringkörpern 39 und 41 bildet der Endkappenboden 37 eine ringmuldenförmige Bodenvertiefung 45, die die tiefste Stelle des Abscheideraums 27 bildet und von Durchbrüchen unterbrochen ist, die Wasserdurchlässe 47 bilden.

Für die Zusammenwirkung mit der Endkappe 23 und dem Rohrstutzen 31 der Elementaufnahme 29 ist eine Fluidführungseinrichtung vorgesehen, die durch ein Adapterteil 49 gebildet ist, das als einstückiges Formteil aus Kunststoff die Form eines Rotationskörpers besitzt, der im Rohrstutzen 31 der Elementaufnahme 29 aufgenommen ist. In seiner Funktion als Fluidführungseinrichtung bildet das Adapterteil 49 voneinander getrennte Fluidwege, von denen der erste von einem Fluidanschluss des Gehäuses 1, der beim vorliegenden Beispiel einen Fluideingang 51 bildet, über den Durchgang 43 der Endkappe 23 zum Filterhohlraum 17 führt und der zweite Fluidweg den Abscheideraum 27 des Filterelements 9 mit dem Wassersammelraum 33 verbindet.

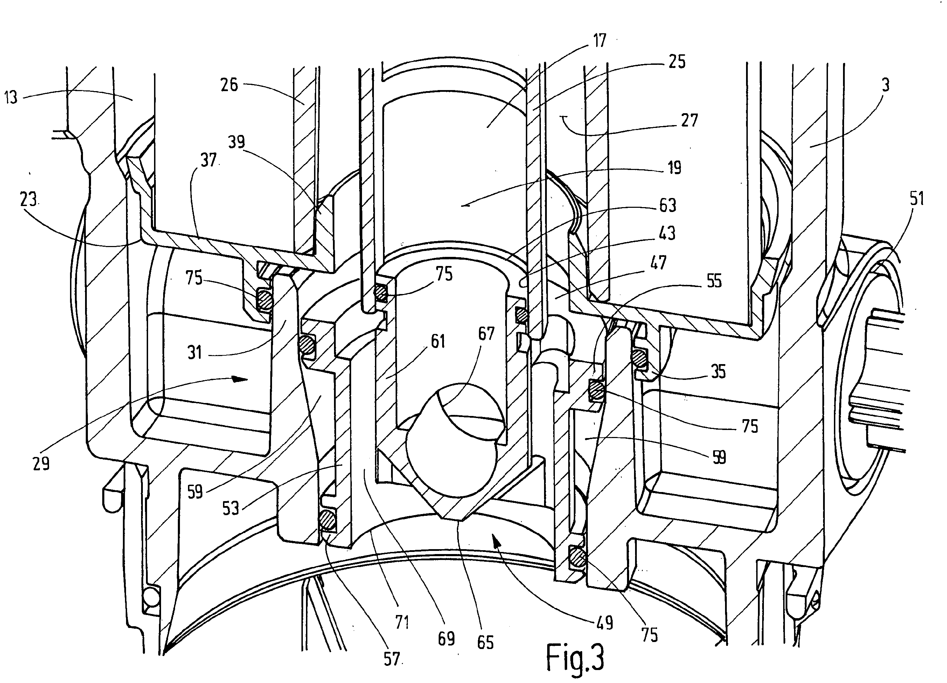

Wie am deutlichsten aus Fig. 2 und 3 zu ersehen ist, weist das Adapterteil 49 einen Hülsenkörper 53 auf, an dessen Außenseite zwei radial vorstehende Ringteile 55 und 57 gebildet sind, die mit der Innenseite des Rohrstutzens 31 in abgedichteter Anlage sind. Die Ringteile 55, 57 befinden sich in einem axialen Abstand voneinander, so dass zwischen ihnen ein Ringraum 59 gebildet ist, der als Teilabschnitt des ersten Fluidweges über eine in der Zeichnung nicht sichtbare Fluidverbindung mit dem Fluideingang 51 verbunden ist. Innerhalb des Hülsenkörpers 53 befindet sich in koaxialer Anordnung ein Innenrohr 61, das sich mit seinem oberen offenen Ende 63 unter Abdichtung in den den Durchgang 43 bildenden Ringkörper 41 der in Funktionsposition befindlichen Endkappe 23 erstreckt. Im Bereich des geschlossenen unteren Endes 65 des Innenrohres 61 zweigt von diesem ein Querkanal 67 ab, der in den Ringraum 59 mündet und somit den ersten Fluidweg über das Innenrohr 61 in den Filterhohlraum 17 hinein vervollständigt. Die Außenseite des Innenrohres 61 befindet sich in einem Abstand von der Innenseite des Hülsenkörpers 53, so dass ein Wasserkanal 69 gebildet ist, in den über die Wasserdurchlässe 47 der Endkappe 23 vom Abscheideraum 27 her Wasser eintritt und über das untere offene Ende 71 des Hülsenkörpers 53 zum Wassersammelraum 33 abfließt. Der Wasserkanal 59 im Adapterteil 49 bildet so den zweiten Fluidweg.

Das Ausführungsbeispiel von Fig. 3 unterscheidet sich gegenüber dem zuvor beschriebenen Beispiel lediglich durch eine vereinfachte Ausbildung der Endkappe 23 des Filterelements 9, während Filtergehäuse und Elementaufnahme 29 gleich ausgebildet sind und auch das gleiche Adapterteil 49 wie beim ersten Ausführungsbeispiel benutzt werden kann. Wie beim vorherigen Beispiel ist auch die Festlegung der Endkappe 23 am Rohrstutzen 31 der Elementaufnahmen 29 mittels des Lagerungsringes 35 verwirklicht, der den Rohrstutzen 31 am oberen Rand übergreift. Anders als beim vorherigen Beispiel fehlen jedoch am Endkappenboden 37 die muldenartige Bodenvertiefung 45 und der sich daran anschließende innere Ringkörper 41. Stattdessen greift das obere Ende 63 des Innenrohres 61 des Adapterteils 49 unmittelbar in das hydrophobe Sieb 25 des Filterelements ein, und die vom Ringkörper 39 umgebene Öffnung bildet mit dem gesamten Zwischenraum zwischen dem hydrophoben Sieb 25 den Wasserdurchlass 47, der den Abscheideraum 27 mit dem Wasserkanal 69 im Adapterteil 49 verbindet.

Bei beiden Ausführungsbeispielen ist die Abdichtung zwischen dem Lagerungsring 35 der Endkappe 23 und dem Rohrstutzen 31 der Elementaufnahme 29 sowie des Hülsenkörpers 53 des Adapterteils 49 gegenüber dem Rohrstutzen 31 und ebenso die Abdichtung des Innenrohres 61 des Adapterteils 41 am Durchgang 43 zum Filterhohlraum 17 jeweils durch einen O-Ring 75 gebildet. Bei der über den Lagerungsring 35 der Endkappe gegenüber dem Rohrstutzen 31 gebildeten Abdichtung der Rohseite 13 gegenüber der Reinseite 19 ist, anders als bei üblichen Filtervorrichtungen, keine Abdichtung am Außenumfang der Endkappe 23 gegenüber der Innenseite des Filtergehäuses 1 erforderlich. Im übrigen ist das jeweilige Adapterteil 49 durch die zumindest teilweise konisch ausgebildete Innenwand der diesbezüglichen Aufnahme 31 mit den sich anschließenden zylindrischen Abschnitten, an denen sich die O-Ringe 75 des Adapterteils 49 abstützen, sicher in Position gehalten. Die Durchströmungsrichtung der Vorrichtung lässt sich auch mit geringen baulichen Anpassungen umkehren. Die Wasser-Abscheideeinrichtung 26 lässt sich auch bei einer nicht dargestellten Ausführungsform als Teil der Elementaufnahme 29 ausbilden.

## Patentansprüche

1. Filtervorrichtung, insbesondere für mit Wasserbeimengungen belastete Fluide wie Dieselöl, mit einem Fluidanschlüsse als Fluideingang (51) und Fluidausgang aufweisenden Filtergehäuse (1), in dem mindestens ein Filterelement (9) aufnehmbar ist, dessen einen inneren Filterhohlraum (17) umgebendes Filtermedium (11) beim Filtriervorgang von Rohseite (13) zu Reinseite (19) hin durchströmbar ist, wobei an einer Seite des Filtermediums (11) eine Wasser-Abscheideeinrichtung (25) und ein Abscheidebereich (27) für abgeschiedenes Wasser vorhanden sind und das Filterelement (9) einen eine Fluidverbindung zum Filterhohlraum (17) bildenden Durchgang (43) und zumindest einen zum Abscheidebereich (27) offenen Wasserdurchlass (47) aufweist, an einer Elementaufnahme (29) des Filtergehäuses (1) festlegbar und mit einem Wassersammelraum (33) verbindbar ist, wobei ein Adapterteil (49) zumindest als Teil einer Fluidführungseinrichtung vorgesehen ist, in dem voneinander getrennte Fluidwege gebildet sind, von denen der erste Fluidweg (59, 67, 61) von einem Fluidanschluss (51) des Gehäuses (1) über den Durchgang (43) zum inneren Filterhohlraum (17) des Filterelementes (9) führt und der zweite Fluidweg (69) den jeweiligen Wasserdurchlass (47) mit dem Wassersammelraum (33) verbindet, **dadurch gekennzeichnet, dass** die Elementaufnahme (29) einen Rohrstutzen (31) aufweist, der die Verbindung zwischen dem das Filterelement (9) aufnehmenden Hauptteil (3) des Gehäuses (1) und dem darunter befindlichen Wassersammelraum (33) bildet, und dass das Adapterteil (49) einen Hülsenkörper (53) aufweist, der im Rohrstutzen (31) aufnehmbar ist.

2. Filtervorrichtung nach Anspruch 1, **dadurch gekennzeichnet, dass** die Wasser-Abscheideeinrichtung (25) mit ihrem zum Abscheidebereich (27) hin offenen Wasserdurchlass (47) Bestandteile des Filterelementes (9) sind und dass das Adapterteil (49) an der Elementaufnahme (29) anbringbar ist.

3. Filtervorrichtung nach Anspruch 1 oder 2, **dadurch gekennzeichnet, dass** das Filterelement (9) am unteren Ende eine Endkappe (23) aufweist, die den in den Filterhohlraum (17) führenden Durchgang (43) und den mindestens einen Wasserdurchlass (47) aufweist, und dass das Adapterteil (49) mit der Endkappe (23) in abgedichtete Fluidverbindung bringbar ist.

4. Filtervorrichtung nach einem der vorhergehenden Ansprüche, **dadurch gekennzeichnet, dass** der Wassersammelraum (33) an der tiefsten Stelle des Filtergehäuses (1) an dieses anschließt und dass die Elementaufnahme (29) des Filtergehäuses (1) sich oberhalb des Wassersammelraumes (33) befindet.

5. Filtervorrichtung nach einem der vorstehenden Ansprüche, **dadurch gekennzeichnet, dass** das Filtermedium (11) des Filterelements (9) beim Filtriervorgang von seiner äußeren Rohseite (13) her zu dem die Reinseite (19) bildenden, inneren Filterhohlraum (17) hin durchströmbar ist und dass der erste Fluidweg (59, 67, 61) des Adapterteils (49) den in den Filterhohlraum (17) führenden Durchgang (43) der Endkappe (23) mit dem Fluidausgang (51) des Gehäuses (1) verbindet und der zweite Fluidweg (69) des Adapterteils (49) den jeweiligen Wasserdurchlass (47) der Endkappe (23) mit dem Wassersammelraum (33) verbindet.

6. Filtervorrichtung nach einem der vorstehenden Ansprüche, **dadurch gekennzeichnet, dass** im Hülsenkörper (53) ein Innenrohr (61) angeordnet ist, dessen offenes Ende (63) einen Anschlussstutzen bildet, der sich unter Abdichtung durch den Durchgang (43) der Endkappe (23) in den Filterhohlraum (17) des in Funktionsposition befindlichen Filterelements (9) erstreckt und einen Teilabschnitt des ersten Fluidweges bildet.

7. Filtervorrichtung nach einem der vorstehenden Ansprüche, **dadurch gekennzeichnet, dass** zwischen der Außenseite des Innenrohres (61) und der Innenseite des Hülsenkörpers (53) des Adapterteils (49) ein einen Wasserkanal (69) bildender Zwischenraum vorgesehen ist, der den zweiten Fluidweg bildet, über den aus den jeweiligen Wasserdurchlässen (47) der Endkappe (23) austretendes Wasser über das offene untere Ende (71) des Hülsenkörpers (53) in den Wassersammelraum (33) gelangt.

8. Filtervorrichtung nach einem der vorstehenden Ansprüche, **dadurch gekennzeichnet, dass** an der Außenseite des Hülsenkörpers (53) radial vorstehende Ringteile (55, 57) mit der Innenseite des Rohrstutzens (31) der Elementaufnahme (29) in abgedichtete Anlage kommen und in einem axialen Abstand voneinander angeordnet sind, so dass zwischen ihnen an der Außenseite des Hülsenkörpers (53) und an der Innenseite des Rohrstutzens (31) ein Ringraum (59) gebildet ist, der als Ausgangsteil des ersten Fluidweges mit dem Fluidausgang (51) des Gehäuses (1) in Verbindung ist.

9. Filtervorrichtung nach einem der vorstehenden Ansprüche, **dadurch gekennzeichnet, dass** im Bereich des vom Anschlussstutzen abgewandten unteren Endes (65) des Innenrohres (61) des Adapterteils (49) ein Querkanal (67) abzweigt, der in den Ringraum (59) mündet und den ersten Fluidweg über das Innenrohr (61) und dessen Anschlussstutzen fortsetzt.

10. Filtervorrichtung nach Anspruch 3, **dadurch gekennzeichnet, dass** die untere Endkappe (23) des Filterelements (9) für die Festlegung an der Elementaufnahme (29) einen vom Endkappenboden (37) axial nach unten vorstehenden Lagerungsring (35) aufweist, der das zugewandte Ende des Rohrstutzens (31) der Elementaufnahme (29) unter Bildung einer Abdichtung übergreift.

11. Filtervorrichtung nach Anspruch 10, **dadurch gekennzeichnet, dass** die untere Endkappe (23) des Filterelements (9) einen den Durchgang (43) umgebenden, vom Endkappenboden (37) axial in den Abscheidebereich (27) vorstehenden Ringkörper (39) aufweist, an dessen Innenseite sich der zumindest eine Wasserdurchlass (47) befindet.

12. Filtervorrichtung nach Anspruch 11, **dadurch gekennzeichnet, dass** ein zweiter, den Durchgang (43) der Endkappe (23) umgebender, axial vorstehender Ringkörper (41) radial innerhalb des ersten Ringkörpers (39) angeordnet ist und dass an der Außenseite des zweiten Ringkörpers (41) ein zur Wasser-Abscheideeinrichtung (25) gehörende hydrophobes Sieb anliegt.

13. Filtervorrichtung nach Anspruch 12, **dadurch gekennzeichnet, dass** der Endkappenboden (37) in dem zwischen erstem und zweitem Ringkörper (39, 41) gelegenen Bereich eine ringförmige Bodenvertiefung (45) aufweist, in der mindestens ein Durchbruch (47) als Wasserdurchlass ausgebildet ist.

## Claims

1. A filter device, in particular for fluids, such as diesel oil, contaminated with water impurities, which device has a filter housing (1) having fluid connections in the form of a fluid inlet (51) and a fluid outlet, in which housing at least one filter element (9) can be accommodated, the filter medium (11) of which, which surrounds an inner filter cavity (17), can have fluid flowing therethrough from the unfiltered side (13) to the filtered side (19) during the filtration process, wherein a water separation device (25) and a separation region (27) for separated water are present on one side of filter medium (11) and filter element (9) has a passage (43) forming a fluid connection to filter cavity (17) and at least one water passage (47) open towards separation region (27), to which water passage an element retainer (29) of filter housing (1) can be secured and connected to a water collecting space (33), wherein an adapter part (49) is provided at least as a part of a fluid-conducting device, in which adapter part fluid paths are formed which are separated from each other, the first fluid path (59, 67, 61) of which leads from a fluid connection (51) of housing (1) to inner filter cavity (17) of filter element (9) via passage (43) and the second fluid path (69) connects the respective water passage (47) to water collecting space (33), **characterised in that** element retainer (29) has a pipe connector (31) which forms the connection between main part (3) of housing (1) which accommodates filter element (9) and water collecting space (33) located thereunder, and that adapter part (49) has a sleeve body (53) which can be accommodated in pipe connector (31).

2. The filter device according to claim 1, **characterised in that** water separation device (25) and water passage (47), which is open towards separation region (27), are components of filter element (9); and that adapter part (49) can be mounted on element retainer (29).

3. The filter device according to claim 1 or 2, **characterised in that** filter element (9) has an end cap (23) at its lower end, which end cap has passage (43) leading into filter cavity (17) and the at least one water passage (47), and that adapter part (49) can be brought into a sealed fluid connection with end cap (23).

4. The filter device according to one of the preceding claims, **characterised in that** water collecting space (33) is connected to filter housing (1) at the lowest point of the latter and that element retainer (29) of filter housing (1) is located above water collecting space (33).

5. The filter device according to one of the preceding claims, **characterised in that** fluid can flow through filter medium (11) of filter element (9) from the outer unfiltered side (13) to the inner filter cavity (17) forming the filtered side (19) of the filter medium during the filtration operation, and that the first fluid path (59, 67, 61) of adapter part (49) connects passage (43) of end cap (23) which leads into filter cavity (17) to fluid outlet (51) of housing (1) and the second fluid path (69) of adapter part (49) connects the respective water passage (47) of end cap (23) to water collecting space (33).

6. The filter device according to one of the preceding claims, **characterised in that** an inner tube (61) is arranged in sleeve body (53), the open end (63) of which tube forms a connecting piece which extends in a sealing manner through passage (43) of end cap (23) into filter cavity (17) of filter element (9) located in the operational position and forms a subsection of the first fluid path.

7. The filter device according to one of the preceding claims, **characterised in that** an intermediate space is provided between the exterior of inner tube (61) and the interior of sleeve body (53) of adapter part (49), which intermediate space forms a water channel (69) which forms the second fluid path via which water, issuing from the respective water passages (47) of end cap (23), flows into the water collecting space (33) via the open lower end (71) of sleeve body (53).

8. The filter device according to one of the preceding claims, **characterised in that** annular sections (55, 57) projecting radially beyond the exterior of sleeve body (53) come into sealing contact with the interior of pipe connector (31) of element retainer (29) and are arranged at an axial distance from one another, with the result that an annular space (59) is formed therebetween on the exterior of the sleeve body (53) and on the interior of the pipe connector (31), which annular space is connected to fluid outlet (51) of housing (1) as the outlet section of the first fluid path.

9. The filter device according to one of the preceding claims, **characterised in that** a cross duct (67) branches off in the region of lower end (65) of inner tube (61) of adapter part (49) which faces away from the connecting piece, which cross duct empties into annular space (59) and continues the first fluid path through inner tube (61) and its connecting piece.

10. The filter device according to claim 3, **characterised in that** lower end cap (23) of filter element (9) has a bearing ring (35) for securing to element retainer (29), which bearing ring projects axially downward from the end cap bottom (37) and engages with the facing end of pipe connector (31) of element retainer (29) to form a seal.

11. The filter device according to claim 10, **characterised in that** lower end cap (23) of filter element (9) has an annular body (39) surrounding passage (43) and projecting axially from end cap bottom (37) into separation region (27), on the interior of which annular body there is at least one water passage (47).

12. The filter device according to claim 11, **characterised in that** a second axially projecting annular body (41) which surrounds passage (43) of end cap (23) is arranged radially inside first annular body (39) and that a hydrophobic screen which is part of separation device (25) rests against the exterior of second annular body (41).

13. The filter device according to claim 12, **characterised in that** end cap bottom (37) has a ring-shaped bottom depression (45) in the region located between first and second annular body (39, 41), in which depression there is designed at least one breakthrough (47) as water passage.

## Revendications

1. Dispositif de filtration, notamment pour des fluides chargés d'additions d'eau, comme de l'huile diesel, comprenant une enveloppe (1) de filtre, qui a des raccords pour du fluide sous la forme d'une entrée (51) pour du fluide et d'une sortie pour du fluide et dans laquelle peut être logé au moins un élément (9) de filtre, dont le milieu (11) filtrant, entourant une cavité (17) intérieure de filtre, peut être traversé lors de l'opération de filtration, du côté (13) brut au côté (19) propre, dans lequel il y a, d'un côté du milieu (11) filtrant, un dispositif (25) de séparation d'eau et une région (27) de séparation de l'eau séparée et l'élément (9) de filtre a un passage (43) formant une liaison fluidique vers la cavité (17) du filtre et au moins un passage (47) pour de l'eau, ouvert vers la région (27) de séparation, peut être fixé sur un logement (29) d'élément de l'enveloppe (1) du filtre et peut communiquer avec un espace (33) collecteur d'eau, dans lequel il est prévu une partie (49) formant adaptateur, au moins comme partie d'un dispositif de conduite du fluide, dans laquelle des trajets de fluide distincts les uns des autres sont formés, dont le premier trajet (59, 67, 61) de fluide va d'un raccord (51) pour du fluide de l'enveloppe (1) à la cavité (17) intérieure du filtre de l'élément (9) de filtre, en passant par le passage (43), et le deuxième trajet (69) de fluide met la traversée (47) respective pour de l'eau en communication avec l'espace (33) collecteur d'eau, **caractérisé en ce que** le logement (29) d'élément a une tubulure (31), qui forme la communication entre la partie (3) principale, logeant l'élément (9) de filtre, de l'enveloppe (1) et l'espace (33) collecteur d'eau se trouvant en dessous, et **en ce que** la partie (49) formant adaptateur a un corps (53) de manchon, qui peut être reçu dans la tubulure (31).

2. Dispositif de filtration suivant la revendication 1, **caractérisé en ce que** le dispositif (25) de séparation d'eau peut, par sa traversée (47) pour de l'eau, ouverte vers la région (27) de séparation, faire partie de l'élément (9) de filtre, et **en ce que** la partie (49) formant adaptateur peut être mise sur le logement (29) d'élément.

3. Dispositif de filtration suivant la revendication 1 ou 2, **caractérisé en ce que** l'élément (9) de filtre a, à l'extrémité inférieure, une coiffe (23) d'extrémité, qui a le passage (43) menant à la cavité (17) du filtre et le au moins un passage (47) pour de l'eau et **en ce que** la partie (49) formant adaptateur peut être mise en liaison fluidique de manière étanche avec la coiffe (23) d'extrémité.

4. Dispositif de filtration suivant l'une des revendications précédentes, **caractérisé en ce que** l'espace (33) collecteur d'eau se raccorde au point le plus bas de l'enveloppe (1) du filtre à celle-ci et **en ce que** le logement (29) d'élément de l'enveloppe (1) du filtre se trouve au-dessus de l'espace (33) collecteur d'eau.

5. Dispositif de filtration suivant l'une des revendications précédentes, **caractérisé en ce que** le milieu (11) filtrant de l'élément (9) de filtre peut, lors de la filtration, être traversé, de son côté (13) brut extérieur à la cavité (17) intérieure de filtre formant le côté (19) propre, et **en ce que** le premier trajet (59, 67, 61) de fluide de la partie (49) formant adaptateur met le passage (43), menant à la cavité (17) du filtre, de la coiffe (23) d'extrémité en communication avec la sortie (51) pour du fluide de l'enveloppe (1) et le deuxième trajet (69) de fluide de la partie (49) formant adaptateur met la traversée (47) pour de l'eau de la coiffe (23) d'extrémité en communication avec l'espace (33) collecteur d'eau.

6. Dispositif de filtration suivant l'une des revendications précédentes, **caractérisé en ce que**, dans le corps (53) de manchon, est disposé un tube (61) intérieur, dont l'extrémité (63) ouverte forme une tubulure de raccordement, qui s'étend, avec étanchéité en passant par le passage (43) de la coiffe (23) d'extrémité, dans la cavité (17) de filtre de l'élément (9) de filtre se trouvant en position de fonctionnement et forme un tronçon partiel du premier trajet de fluide.

7. Dispositif de filtration suivant l'une des revendications précédentes, **caractérisé en ce qu'**entre le côté extérieur du tube (61) intérieur et le côté intérieur du corps (53) de manchon de la partie (49) formant adaptateur, est prévu un espace intermédiaire formant un canal (69) pour de l'eau, qui forme le deuxième trajet de fluide par lequel de l'eau, sortant de la traversée (47) pour de l'eau de la coiffe (23) d'extrémité, arrive dans l'espace (33) collecteur d'eau en passant par l'extrémité (71) inférieure ouverte du corps (53) de manchon.

8. Dispositif de filtration suivant l'une des revendications précédentes, **caractérisé en ce que**, du côté extérieur du corps (53) du manchon, des parties (55, 57) annulaires en saillie radialement viennent en contact, avec étanchéité, avec la face intérieure de la tubulure (31) du logement (29) d'élément et sont disposées à distance axiale les unes des autres, de manière à former entre elles, du côté extérieur du corps (53) de manchon et sur la face intérieure de la tubulure (31), un espace (59) annulaire, qui communique, en tant que partie de sortie du premier trajet de fluide, avec la sortie (51) pour du fluide de l'enveloppe (1).

9. Dispositif de filtration suivant l'une des revendications précédentes, **caractérisé en ce que**, dans la région de l'extrémité (65) inférieure, tournée vers la tubulure de raccordement, du tube (61) intérieur de la partie (49) formant adaptateur, bifurque un canal (67) transversal, qui débouche dans l'espace (59) annulaire et qui prolonge le premier trajet de fluide par le tube (61) intérieur et sa tubulure de raccordement.

10. Dispositif de filtration suivant la revendication 3, **caractérisé en ce que** la coiffe (23) d'extrémité inférieure de l'élément (9) de filtre a, pour la fixation au logement (29) d'élément, un anneau (35) de montage, en saillie axialement vers le bas à partir du fond (37) de la coiffe d'extrémité, anneau qui, en formant une étanchéité, chevauche l'extrémité tournée vers lui de la tubulure (31) du logement (29) d'élément.

11. Dispositif de filtration suivant la revendication 10, **caractérisé en ce que** la coiffe (23) d'extrémité inférieure de l'élément (9) de filtre a une pièce (39) annulaire, qui entoure le passage (43), qui est en saillie axialement du fond (37) de la coiffe d'extrémité dans la région (27) de dépôt et sur la face intérieure de laquelle se trouve le au moins un passage (47) pour de l'eau.

12. Dispositif de filtration suivant la revendication 11, **caractérisé en ce qu'**une deuxième pièce (41) annulaire, entourant le passage (43) de la coiffe (23) d'extrémité et en saillie axialement, est disposée radialement à l'intérieur de la première pièce (39) annulaire et **en ce que**, sur la face extérieure de la deuxième pièce (41) annulaire, s'applique un tamis hydrophobe appartenant au dispositif (25) de séparation d'eau.

13. Dispositif de filtration suivant la revendication 12, **caractérisé en ce que** le fond (37) de la coiffe d'extrémité a, dans la région entre la première et la deuxième pièces (39, 41) annulaires, un creux (45) annulaire de fond, dans lequel est constituée, sous forme d'un passage pour de l'eau, au moins une traversée (47).
